# FASCICULE DE BREVET EUROPEEN

(11) **EP 2 516 219 B1**
(45) Date de publication et mention de la délivrance du brevet: **12.11.2014**
(21) Numéro de dépôt: 10809015.0
(22) Date de dépôt: 14.12.2010
(51) Int. Cl.: B60S 1/38

(54) **BALAI D'ESSUIE-GLACE À FLEXIBILITÉ VERTICALE MODIFIABLE**
SCHEIBENWISCHERBLATT MIT VERÄNDERBARER VERTIKALER FLEXIBILITÄT
WINDSCREEN-WIPER BLADE HAVING MODIFIABLE VERTICAL FLEXIBILITY

(30) Priorité: 21.12.2009 FR 0959281
(43) Date de publication de la demande: 31.10.2012
(73) Titulaire: Airbus Operations (S.A.S.), 31060 Toulouse (FR)
(72) Inventeur: LIEVEN, Patrick, F-31620 Fronton (FR); CHAUMEL, Pascal, F-31830 Plaisance du Touch (FR)
(74) Mandataire: Gicquel, Olivier Yves Gérard
(86) Numéro de dépôt international: PCT/FR2010/052725
(87) Numéro de publication internationale: WO 2011/077028

(56) Documents cités:
- DE-A1-102007 050 171
- DE-A1-102008 016 043
- FR-A1- 2 879 541
- GB-A- 2 423 009

## Description

La présente invention relève du domaine des essuie-glaces et concerne plus particulièrement les essuie-glaces pour aéronefs.

Dans le domaine de l'aéronautique, pour permettre au pilote d'observer l'environnement extérieur de l'avion, le cockpit est muni de différentes vitres et en particulier d'une ou de plusieurs vitres frontales formant le pare-brise. Ces vitres frontales, en général au nombre de deux dans les avions commerciaux, sont jusqu'à présent classiquement de forme plane et leur continuité aérodynamique au fuselage sur leur pourtour est assurée par un joint d'étanchéité.

Par temps pluvieux, les écoulements d'eau sur la ou les vitres frontales, ainsi que des impacts d'insectes peuvent gêner la bonne visibilité des pilotes en particulier lors des décollages et atterrissages. Aussi des essuies-glaces sont installés sur la face extérieure de ces vitres frontales. Leur fonctionnement par balayage cyclique sur la vitre d'un arc de disque, par un balai globalement perpendiculaire à cet arc et portant un racleur est connu, et similaire par exemple à celui des véhicules automobiles.

Le racleur de l'essuie-glace parcourt donc, lors de ce balayage cyclique, une zone appelée la zone d'essuyage. Pour que l'essuyage soit optimal, il faut que le contact entre le racleur et le pare-brise soit maintenu et uniforme sur toute la longueur du balai et ceci pendant tout l'essuyage.

Lors des phases de non utilisation, pour des raisons de visibilité, ces essuie-glaces sont stockés dans une position de repos située généralement sur un bord de la zone d'essuyage (verticale ou horizontale) appelée position de stockage.

Des éléments de faible rigidité, tels que le joint d'étanchéité, peuvent être situés dans la zone balayée par le racleur de l'essuie-glace lors de son essuyage normal (zone d'essuyage chevauchant le joint d'étanchéité pour essuyer une zone maximale de la vitre), ou lors de sa transition de la zone d'essuyage vers cette position de stockage ou de sa transition inverse, et peuvent de ce fait être endommagés par le passage récurrent du racleur. La conséquence est à la fois une détérioration du joint d'étanchéité et donc sa diminution d'efficacité, et une traînée aérodynamique accrue de l'avion, qui se traduit en consommation de carburant également accrue.

Pour des questions d'élargissement du champ visuel des pilotes, et d'aérodynamique, la conception des pare-brise d'avions évolue vers une forme à double courbure, au lieu de la forme plane précédente.

Cette forme en double courbure se caractérise
1/ par une courbure transversale du pare-brise, d'abord assez forte à proximité de la partie latérale du fuselage, puis plus faible au niveau de la partie centrale du fuselage, tel que vu de face,
2/ par une courbure longitudinale de faible rayon sur toute la hauteur du pare-brise, épousant la forme générale du fuselage.

Les essuie-glaces comportant des racleurs rigides, adaptés à des surfaces planes, ne conviennent plus pour ces formes courbes car le contact entre le pare-brise et le racleur n'est plus assuré sur toute la surface du balai pendant l'essuyage complet.

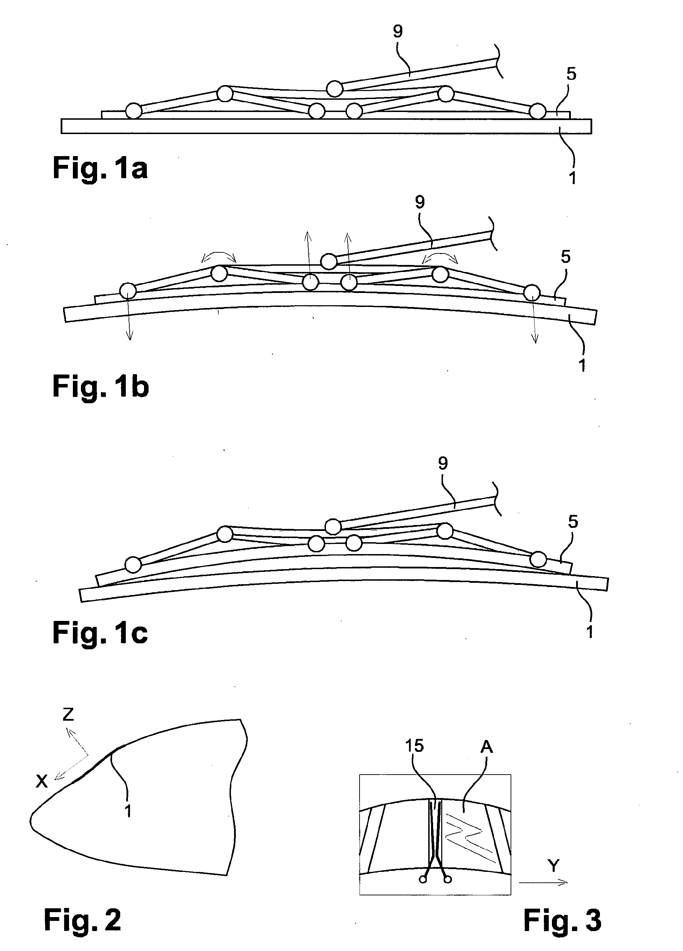

Un essuie-glace articulé de type pantographe classique (figures 1a et 1b), tel qu'utilisé sur des véhicules automobiles, est mieux adapté car son racleur accepte une variation de courbure du pare-brise lors de l'essuyage.

Toutefois ce type d'essuie-glace n'apporte pas de solution au problème de l'endommagement éventuel du ou des joints d'étanchéité lors de l'essuyage ou lors des transitions de ou vers la position de stockage des essuies-glaces.

Par ailleurs, si la transition comporte un relevage du bras (figure 1 c) avant son stockage, le fonctionnement de l'essuie-glace articulé de type pantographe classique entraîne, lors de son relevage, le maintien d'un contact des deux extrémités du racleur avec le pare-brise, susceptible de provoquer une détérioration locale de celui-ci, ou une détérioration du racleur lui-même.

Document DE 10 2008016043 A montre un balai tel que décrit dans le préambule de la revendication 1.

L'objectif de cette invention est de proposer un dispositif d'essuie-glace qui garde un contact uniforme entre le racleur et le pare-brise qu'il doit essuyer pendant tout le mouvement lié à l'essuyage, et qui permette simultanément de remédier au problème de l'endommagement des éléments sensibles comme les joints d'étanchéité entre le pare-brise et le fuselage lors du déplacement éventuel de la zone d'essuyage vers la position de stockage ou son déplacement inverse.

Un second but de l'invention est de minimiser l'usure du racleur d'essuie-glace dans sa position de stockage.

Un troisième but est de permettre un relevage simultané de tout le racleur.

A cet effet l'invention propose un balai pour une surface du type à double courbure, ledit balai comprenant un racleur longitudinal flexible, et un moyen d'exercer une force d'appui en au moins un point dudit racleur selon une direction Z principalement normale à la surface, caractérisé en ce qu'il comporte également une pièce longitudinale, solidarisée au racleur en plusieurs points, et des moyens de faire varier dans le temps et en au moins un segment de la pièce longitudinale, la rigidité en flexion de cette pièce longitudinale dans un plan normal XZ à la surface, entre des valeurs préalablement choisies.

On comprend que la capacité de faire varier la flexibilité verticale (rigidité en flexion dans le plan vertical) de la tige longitudinale solidarisée au racleur permet de transmettre l'effort de plaquage reçu d'un bras extérieur de façon choisie soit en un seul point du racleur, soit en un ensemble de points. Dans ce second cas, le racleur se plaque en chacun de ces points sur la surface sur laquelle il est placé, et prend donc grosso modo la forme de cette surface. Dans le premier cas, le racleur prend au contraire la forme de la tige longitudinale.

Cette disposition permet par ailleurs d'éviter les appuis intempestifs aux extrémités des racleurs fixés à des balais de type pantographe classiques lors du relèvement du racleur.

Selon un mode particulier de réalisation, la pièce longitudinale présente au moins deux valeurs de rigidité en flexion très différentes selon des axes perpendiculaires à son axe longitudinal X.

On comprend que cette disposition correspond à l'utilisation d'une pièce longitudinale dont la section comporte au moins deux dimensions très différentes pour engendrer ces rigidités en flexion très différentes.

Plus particulièrement, la pièce longitudinale est une lame de section rectangulaire, dont l'épaisseur est telle que la rigidité en flexion de la lame perpendiculairement à cette épaisseur soit nettement inférieure à celle du racleur, et dont la largeur est telle que la rigidité en flexion de la lame perpendiculairement à cette largeur soit nettement supérieure à celle du racleur.

On comprend que la rigidité en flexion doit être soit suffisamment faible pour suivre les déformations du racleur, soit suffisamment grande pour contraindre le racleur à venir se stocker au voisinage de la tige longitudinale.

Encore plus particulièrement, les moyens de faire varier dans le temps la rigidité en flexion de la pièce longitudinale sont des moyens de faire pivoter la lame entre une position pour laquelle son plan principal est parallèle au plan horizontal XY, et une position pour laquelle son plan principal est perpendiculaire au plan horizontal XY.

Cette disposition permet une mise en oeuvre simple.

Selon un autre mode de réalisation, la pièce longitudinale est un cylindre long et de faible section, creux, adapté à être pressurisé, et tel que la rigidité en flexion du cylindre perpendiculairement à sa section soit nettement inférieure celle du racleur lorsqu'il n'est pas pressurisé, et que la rigidité en flexion du cylindre perpendiculairement à sa section soit nettement supérieure à celle du racleur lorsque le cylindre est pressurisé.

Dans ce cas, selon une réalisation avantageuse, les moyens de faire varier dans le temps la rigidité en flexion de la pièce longitudinale sont des moyens de pressurisation du cylindre.

Toujours dans ce cas et à titre de simplification de fabrication, le cylindre et le racleur sont avantageusement réalisés en une seule pièce.

Ce mode de réalisation permet une mise en oeuvre peu coûteuse du dispositif, en particulier lorsque le racleur et le cylindre sont réalisés en une seule pièce.

Selon un mode de réalisation avantageux, le balai comporte un pantographe solidarisé à la pièce longitudinale en plusieurs points.

De la même manière, ceci correspond à une mise en oeuvre industrielle simple du dispositif. Le balai d'essuie-glace est alors installable en lieu et place d'un balai traditionnel, sans modification du bras de suspension ou des moyens d'entraînement de l'essuie-glace, en prenant simplement en compte la connexion électrique ou pneumatique des moyens de contrôle de la rigidité en flexion de la pièce longitudinale.

L'invention vise sous un second aspect un essuie glace comprenant un bras d'entraînement et de suspension, caractérisé en ce que il comprend un balai tel qu'exposé, solidarisé à une extrémité dudit bras de suspension.

Avantageusement, l'essuie-glace comprenant un bras d'entraînement et de suspension comprend un balai doté de moyens de pilotage de la rigidité en flexion de la tige longitudinale dans le plan vertical XZ, ledit balai étant solidarisé à une extrémité dudit bras de suspension et comprend en outre une électronique de pilotage des moyen de commande de la rigidité en flexion de la pièce longitudinale dans le plan vertical XZ, comportant un processeur et une mémoire dans laquelle est stockée une logique de pilotage, cette électronique pilotant également un moteur d'entraînement de l'essuie-glace.

Cette électronique de pilotage peut être dédiée à la commande des essuie-glaces ou au contraire être commune à de nombreux moyens de l'avion. Dans ce cas, un logiciel spécifique installé sur un calculateur existant peut gérer le pilotage des moyens de pilotage de la flexibilité de la tige de support du racleur.

L'invention vise également un procédé de pilotage d'un essuie-glace tel que dans une phase d'essuyage, la pièce longitudinale est pilotée de telle manière que sa rigidité en flexion dans le plan vertical XZ soit faible, et dans une phase de transition, la pièce longitudinale est pilotée de telle manière que sa rigidité en flexion dans le plan vertical XZ soit forte, puis le bras de suspension et d'entraînement est déplacé au dessus de la position de stockage.

L'invention vise sous encore un autre aspect un produit programme d'ordinateur comportant une série d'instructions apte à mettre en oeuvre un procédé tel qu'exposé lorsque ladite série d'instructions est exécutée sur un ordinateur.

Cette disposition vise le cas où la commande des essuie-glaces est réalisée par un calculateur pré-existant, exécutant un logiciel pré-mémorisé pour piloter les essuie-glaces.

Les buts et avantages de l'invention seront mieux compris à la lecture de la description et des dessins d'un mode particulier de réalisation, donné à titre d'exemple non limitatif et pour lesquels les dessins représentent :
Les figures 1 a et 1 b illustrent un balai d'essuie-glace de type pantographe classique, sur une vitre plane et sur une vitre présentant une courbure,
La figure 1c représente un même balai en cours de relevage,
La figure 2 est une vue de profil de la partie avant d'un fuselage d'avion,
La figure 3 est une vue de face de la partie avant d'un fuselage d'avion,
La figure 4a est une vue schématique de côté d'un essuie-glace selon l'invention en position rectiligne, et la figure 4b montre une section droite de cet balai d'essuie-glace au droit d'un moyen de commande,
La figure 5a est une vue schématique de côté d'un essuie-glace selon l'invention, en position d'essuyage, et la figure 5b montre une section droite de cet balai d'essuie-glace au droit d'un moyen de commande,
La figure 6 est une vue schématique de détail d'un balai d'essuie-glace dans une variante de l'invention, et la figure 6b montre une section droite de ce balai.

L'invention trouve sa place dans la partie avant d'un fuselage d'avion, au niveau du pare-brise du cockpit.

Comme on le voit sur la figure 3, le pare-brise comporte dans le présent exemple nullement limitatif deux vitres frontales 1, reliées au fuselage 2 par une bride et un joint d'étanchéité 3. Dans l'exemple illustré par la figure 2, les deux vitres frontales 1 sont séparées par un montant vertical 15.

Un essuie-glace 4, illustré sur la figure 3, est installé face à chacune des vitres frontales 1 avec pour fonction d'essuyer la surface de ladite vitre 1 par un balayage cyclique, entraîné et commandé par un moteur de type connu de l'homme de l'art. Les deux essuie-glaces 4 sont disposés de façon symétrique pour les deux vitres frontales formant le pare-brise, et sont stockés, comme on le voit sur la figure 3, dans une position de repos, dans le présent exemple une position verticale située au voisinage immédiat du montant vertical 15.

On définit pour la suite de la description un axe longitudinal X, tangent au pare-brise localement et orienté selon le sens longitudinal de l'essuie-glace 4, un axe transversal Y, tangent au pare-brise localement et perpendiculaire à l'essuie-glace 4. De même, on définit un axe intérieur-extérieur Z confondu avec la normale locale du pare-brise 1 de l'avion. On utilisera les termes haut et bas par référence à l'axe intérieur-extérieur Z.

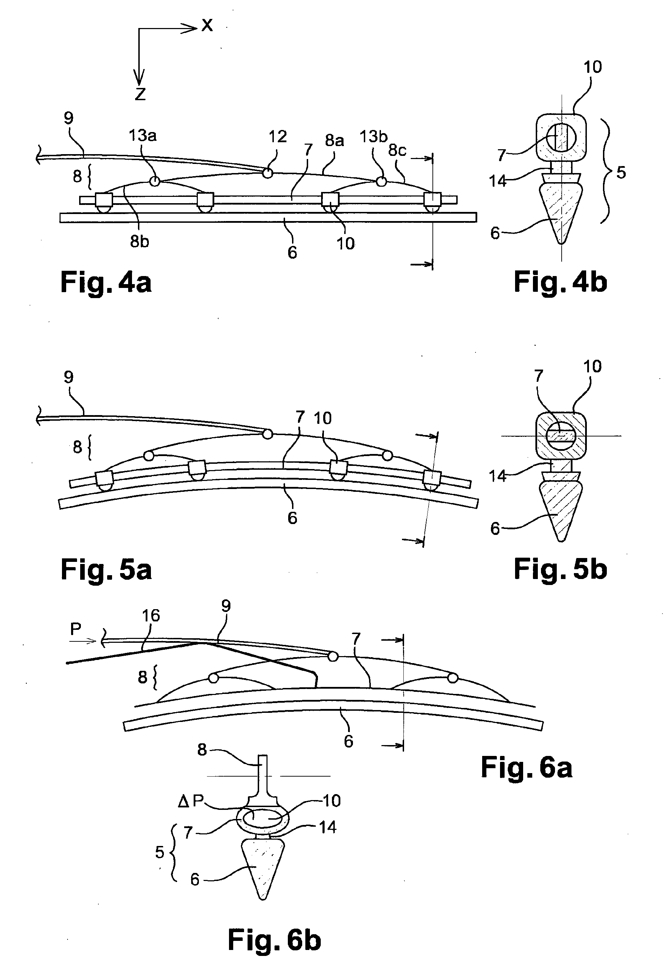

Un essuie-glace 4 selon l'invention, représenté schématiquement figure 4, comporte un balai 5 solidarisé à une extrémité d'un bras d'entraînement et de suspension 9 par son milieu 12.

Le bras de suspension 9 est solidarisé par son autre extrémité à un axe d'entraînement destiné à conférer au bras 9 et au balai 5 un mouvement de rotation alternatif parallèlement au plan principal de la zone d'essuyage A de la vitre 1 que ledit balai 5 doit essuyer.

Le balai 5 comprend un pantographe 8 et une tige de support 7 solidarisée à un racleur 6. Le pantographe 8, la tige de support 7 et le racleur 6 sont disposés dans un même plan XZ perpendiculaire au plan principal XY de la zone d'essuyage A.

Le pantographe 8 reprend un effort selon l'axe vertical Z d'appui vers la surface 1, généré par le bras de suspension 9, et le répartit en quatre points (dans l'exemple illustré sur les figures 4 à 6) de la tige de support 7 du racleur 5 sans générer de contraintes sur les positions verticales respectives de ces points, de manière à pouvoir absorber des variations de courbure de la surface.

Pour ce faire et de façon connue en soi, il comporte dans le présent exemple une branche supérieure 8a, articulée en libre rotation selon l'axe transversal Y, par son milieu 12 au bras de suspension 9. Le pantographe 8 comporte en outre, articulées en libre rotation selon l'axe transversal Y autour des extrémités 13a, 13b de la branche supérieure 8a, deux sous-branches 8b, 8c suspendues par leur milieu respectif. Chacune de ces branches et sous-branches 8a, 8b, 8c est de forme arquée et réalisée dans un matériau semi-rigide, par exemple sous forme de tige bi-positions de section rectangulaire.

Le racleur 6 du balai 5 est similaire au racleur des essuie-glaces de voitures ou d'avions de type connu. Ce racleur 6 est par exemple réalisé en caoutchouc ou élastomère ou tout autre matériau pour ce type d'application.

On comprend que le racleur 6 est choisi de manière à être suffisamment flexible (rigidité faible) pour épouser une ligne de la surface à double courbure, si on lui applique une force d'appui en un nombre de suffisant de points pour garantir un contact sur toute sa longueur.

Il est de section triangulaire (voir les sections figures 4b, 5b), une pointe du triangle étant orientée vers le pare-brise 1 selon l'axe intérieur-extérieur Z.

Le bras de suspension 9, le pantographe 8 et le racleur 6, sont en soi connu de l'homme de l'art et sortent du cadre de la présente invention. Ils ne sont donc pas détaillés plus avant ici.

Le racleur 6 est solidarisé au pantographe 8 par l'intermédiaire de quatre pièces de support 10, attachés chacune à une extrémité d'une sous-branche 8b, 8c, du pantographe 8 (figures 4 et 5).

La liaison entre le racleur 6 et chaque pièce de support 10 est une zone 14 de plus faible résistance à la flexion transversale, de manière à permettre au racleur 6 de s'incliner légèrement autour de son axe longitudinal X dans son mouvement de balayage de la vitre 1.

Dans la mise en oeuvre de l'invention décrite ici, les quatre supports 10 sont reliés entre eux par une tige bi-positions 7 s'étendant principalement selon l'axe longitudinal X, de façon parallèle au racleur 6 et pratiquement sur une même longueur.

La tige bi-positions 7 est ici une lame métallique de section rectangulaire, laquelle présente deux dimensions principales nettement différentes, par exemple une épaisseur de 1 mm pour une largeur de 6 mm. Ces dimensions, indiquées ici à titre d'exemple non limitatif, ainsi que son matériau de fabrication, sont choisies de manière à conférer une grande rigidité en flexion à cette tige bi-positions 7 perpendiculairement à son épaisseur, et une grande rigidité de flexion perpendiculairement à sa largeur. Les inerties sur les deux axes Y et Z de sa section sont en effet très différentes.

Chacune des pièces de support 10 comporte un évidement de section circulaire, orienté selon l'axe longitudinal X, et adapté à permettre le passage de la tige bi-positions 7.

La tige bi-positions 7 est rendue mobile entre deux positions (figures 4b, 5b), dans lesquelles elle est orientée de telle sorte que son plan de plus faible épaisseur est soit parallèle au plan horizontale XY (position couchée), soit parallèle au plan XZ (position debout), et donc perpendiculaire au plan horizontal XY.

Dans la première position (couchée), la tige bi-positions 7 présente une faible résistance à la flexion dans le plan vertical XZ. De ce fait, elle va se déformer de façon similaire à la déformation du racleur 6, laquelle est générée par la souplesse dudit racleur 6 et la courbure de la vitre 1 à essuyer.

Dans la seconde position (debout), la tige bi-positions 7 présente une forte résistance à la flexion dans le plan vertical XZ. De ce fait, elle adopte une forme sensiblement rectiligne orientée selon l'axe longitudinal X, et confère alors au racleur 6 par l'intermédiaire des pièces de support 10 une position également rectiligne. La tige bi-positions 7 et le racleur 6 sont alors globalement parallèles.

Le tige bi-positions 7 est entraînée d'une de ses positions à l'autre par des moyens de pilotage électromagnétiques (par exemple en disposant localement des aimants polarisés sur les faces de la tige bi-positions 7 et des électro-aimants de pilotage dans les pièces de support 10). En variante, ces moyens de pilotage peuvent être mécaniques (en utilisant par exemple un moteur électrique miniature d'axe parallèle à l'axe longitudinal et entraînant par l'intermédiaire d'un engrenage la tige bi-positions en rotation).

De tels moyens de faire passer la tige bi-positions 7 d'une position à une autre, sont connus de l'homme de l'art et leur type et mode de fonctionnement précis sortent en tant que tels du cadre de l'invention.

Les moyens de pilotage de la position de la tige bi-positions 7, sont reliés à une électronique de pilotage, non représentée ici, comportant par exemple un processeur et une mémoire non volatile dans laquelle est stockée une logique de pilotage, cette électronique pilotant également, par économie de moyens, le moteur d'entraînement de l'essuie-glace 4.

En fonctionnement, dans la phase d'essuyage du pare-brise, le racleur 6 est plaqué contre la vitre 1 par l'effort réparti par le pantographe 8. Dans cette phase, la tige bi-positions 7 est en position "couchée", présentant sa face large au plan horizontal XY de la vitre 1. Sa rigidité en flexion transversale est alors très forte et permet de transférer le mouvement cyclique de balayage, imprimé par le bras de suspension 9, au racleur 6 sans déformation longitudinale de celui-ci.

Lorsque l'essuie-glace doit être mis en position de stockage, sur commande du pilote ou automatiquement selon une logique de commande des essuie-glace pré-existante, l'électronique de pilotage commande une rotation de 90° de la lame métallique 7. Ceci induit une augmentation de sa rigidité en flexion dans le plan vertical XZ, qui devient alors nettement supérieure à celle du racleur 6. Celui-ci se trouve donc ramené le long de la lame métallique 7, dans une position globalement rectiligne.

Cette position évite le travers des balais d'essuie-glaces à pantographes classiques, pour lesquels les extrémités du racleur 6 frottent la vitre lors du relèvement dudit racleur.

Une fois le racleur 6 redressé, la bras 9 est déplacé latéralement, par des moyens connus, vers une position de stockage, par exemple sur le montant vertical 15 situé entre les deux vitres frontales 1.

En position de stockage, la lame peur éventuellement être couchée à nouveau, de manière à ramener le racleur au contact du montant vertical 15.

La portée de la présente invention ne se limite pas aux détails des formes de réalisation ci-dessus considérées à titre d'exemple, mais s'étend au contraire aux modifications à la portée de l'homme de l'art.

Dans une variante avantageuse, illustrée par les figures 6a et 6b, la lame métallique 7 est remplacée par un cylindre creux pressurisable, par exemple formé d'une seule pièce avec le racleur 6 et les pièces de support 10. Dans cette variante, le cylindre creux 7 présente une longueur de quelques dizaines de centimètres, similaire à celle du racleur 6, et un diamètre de l'ordre de un centimètre. Il est réalisé en élastomère ou en matériau composite flexible.

Lorsqu'il n'est pas pressurisé, la rigidité en flexion de ses parois est très faible et la rigidité en flexion de l'ensemble cylindre + racleur est proche de celle du racleur 6 seul. Dans cette situation, le racleur 6 épouse la forme de la surface sur laquelle il est plaqué.

Au contraire, lorsque le cylindre 7 est pressurisé (par exemple 0.5 bar au dessus de la pression ambiante), sa rigidité en flexion (résistance à la flexion) augmente et devient rapidement très supérieure à celle du racleur 6. Dans cette situation, le racleur 6 épouse la forme du cylindre 7 pressurisé, rectiligne et globalement parallèle au plan de la surface 1.

Dans cette mise en oeuvre, le cylindre 7 est relié par un tube 16 à un moyen de pressurisation non représenté sur les figures, de type connu en soi, et disposé à l'intérieur du fuselage.

Alternativement, le cylindre est préalablement rempli partiellement de fluide, et un seul un ballonnet interne au cylindre est pressurisable.

Dans cette disposition, on a encore une rigidité en flexion très faible du cylindre lorsque le ballonnet n'est pas pressurisé, et une rigidité forte dès que le ballonnet est pressurisé.

Le fonctionnement de ce dispositif utilisant un cylindre pressurisé est analogue à celui de la description antérieure, avec ici encore une pièce longitudinale 7 présentant au moins deux valeurs de flexibilité verticale (rigidité en flexion) très différentes, et des moyens de contrôle de la transition entre ces valeurs.

Dans une autre variante, le racleur est solidarisé à une tige de support dont seule les deux extrémités sont dotées de segments de flexibilité variable (lames métalliques orientables ou cylindres pressurisables éventuellement indépendamment).

Cette variante permet de piloter le relevage des extrémités du racleur sans décoller le reste du racleur de la surface à essuyer. Ceci peut être utile dans le cas ou le secteur de disque balayé par le racleur de l'essuie-glace chevauche en partie le fuselage pour maximiser la zone essuyé et la visibilité du pilote. Le relevage local du racleur évite alors de frotter le joint d'étanchéité, et donc réduit sa détérioration.

## Revendications

1. Balai (5) pour une surface (1) du type à double courbure, ledit balai comprenant un racleur (6) longitudinal flexible, et un moyen (8) d'exercer une force d'appui en au moins un point dudit racleur (6) selon une direction Z principalement normale à la surface (1), et
également une pièce longitudinale (7), solidarisée au racleur (6) en plusieurs points (10), **caractérisé en ce qu'**il comporte
des moyens de faire varier dans le temps et en au moins un segment de la pièce longitudinale (7), la rigidité en flexion de cette pièce longitudinale (7) dans un plan normal XZ à la surface (1), entre des valeurs préalablement choisies.

2. Balai selon la revendication 1, **caractérisé en ce que en ce que** la pièce longitudinale (7) présente au moins deux valeurs de rigidité en flexion très différentes selon des axes perpendiculaires à son axe longitudinal X.

3. Balai selon la revendication 2, **caractérisé en ce que** la pièce longitudinale (7) est une lame de section rectangulaire, dont l'épaisseur est telle que la rigidité en flexion de la lame perpendiculairement à cette épaisseur soit nettement inférieure à celle du racleur (6), et dont la largeur est telle que la rigidité en flexion de la lame perpendiculairement à cette largeur soit nettement supérieure à celle du racleur (6).

4. Balai selon la revendication 3, **caractérisé en ce que** les moyens de faire varier dans le temps la rigidité en flexion de la pièce longitudinale (7) sont des moyens de faire pivoter la lame entre une position pour laquelle son plan principal est parallèle au plan horizontal XY, et une position pour laquelle son plan principal est perpendiculaire au plan horizontal XY.

5. Balai selon la revendication 2, **caractérisé en ce que** la pièce longitudinale (7) est un cylindre long et de faible section, creux, adapté à être pressurisé, et tel que la rigidité en flexion du cylindre perpendiculairement à sa section soit nettement inférieure de celle du racleur (6) lorsqu'il n'est pas pressurisé, et que la rigidité en flexion du cylindre perpendiculairement à sa section soit nettement supérieure à celle du racleur (6) lorsque le cylindre est pressurisé.

6. Balai selon la revendication 5, **caractérisé en ce que** les moyens de faire varier dans le temps la rigidité en flexion de la pièce longitudinale (7) sont des moyens de pressurisation du cylindre.

7. Balai selon l'une quelconque des revendications 5 et 6, **caractérisé en ce que** le cylindre et le racleur (6) sont réalisés en une seule pièce.

8. Balai selon l'une quelconque des revendications précédentes, **caractérisé en ce qu'**il comporte un pantographe (8) solidarisé à la pièce longitudinale (7) en plusieurs points (10).

9. Essuie glace (4) comprenant un bras d'entraînement et de suspension (9), **caractérisé en ce qu'**il comprend un balai (5) selon l'une quelconque des revendications précédentes, solidarisé à une extrémité dudit bras de suspension (9)

10. Essuie-glace (4) comprenant un bras d'entraînement et de suspension (9), **caractérisé en ce que** il comprend un balai (5) selon l'une quelconque des revendications 3 à 8, solidarisé à une extrémité dudit bras de suspension (9) et **en ce qu'**il comprend une électronique de commande des moyens de pilotage (10) de la rigidité en flexion de la pièce longitudinale (7) dans le plan vertical XZ, comportant un processeur et une mémoire dans laquelle est stockée une logique de pilotage, cette électronique pilotant également un moteur d'entraînement de l'essuie-glace.

11. Procédé de pilotage d'un essuie-glace (4) selon l'une quelconque des revendications 9 à 10, **caractérisé en ce que** :
dans une phase d'essuyage, la pièce longitudinale (7) est pilotée de telle manière que sa rigidité en flexion dans le plan vertical XZ soit faible,
dans une phase de transition, la pièce longitudinale (7) est pilotée de telle manière que sa rigidité en flexion dans le plan vertical XZ soit forte, puis le bras de suspension et d'entraînement (9) est déplacé au dessus de la position de stockage (15).

12. Produit programme d'ordinateur comportant une série d'instructions apte à mettre en oeuvre un procédé selon la revendication 11 lorsque ladite série d'instructions est exécutée sur un ordinateur.

## Patentansprüche

1. Scheibenwischerblatt (5) für eine Fläche (1) des Typs mit doppelter Krümmung, wobei das Wischerblatt einen biegsamen Längsabstreifer (6) und ein Mittel (8) zur Ausübung einer Auflagekraft an mindestens einem Punkt des Abstreifers (6) in eine Z-Richtung hauptsächlich normal zur Fläche (1) und
auch ein mit dem Abstreifer (6) an mehreren Punkten (10) verbundenes Längsstück (7) umfasst, **dadurch gekennzeichnet, dass** es Mittel umfasst, um zeitlich und in mindestens einem Segment des Längsstücks (7) die Biegesteifigkeit dieses Längsstücks (7) in einer Ebene XZ normal zur Fläche (1) zwischen vorher ausgewählten Werten zu variieren.

2. Scheibenwischerblatt nach Anspruch 1, **dadurch gekennzeichnet, dass** das Längsstück (7) mindestens zwei sehr unterschiedliche Biegesteifigkeitswerte entlang der Achsen senkrecht zu seiner Längsachse X aufweist.

3. Scheibenwischerblatt nach Anspruch 2, **dadurch gekennzeichnet, dass** das Längsstück (7) ein Blatt mit rechteckigem Querschnitt ist, dessen Dicke derart ist, dass die Biegesteifigkeit des Blattes senkrecht auf diese Dicke deutlich geringer als jene des Abstreifers (6) ist, und dessen Breite derart ist, dass die Biegesteifigkeit des Blattes senkrecht auf diese Breite deutlich größer als jene des Abstreifers (6) ist.

4. Scheibenwischerblatt nach Anspruch 3, **dadurch gekennzeichnet, dass** die Mittel zur zeitlichen Variation der Biegesteifigkeit des Längsstücks (7) Mittel sind, um das Blatt zwischen einer Position, in der seine Hauptebene parallel zur Horizontalebene XY ist, und einer Position, in der seine Hauptebene senkrecht zur Horizontalebene XY ist, zu schwenken.

5. Scheibenwischerblatt nach Anspruch 2, **dadurch gekennzeichnet, dass** das Längsstück (7) ein langer hohler Zylinder mit kleinem Querschnitt ist, der dazu geeignet ist, unter Druck gesetzt zu werden, und der derart ist, dass die Biegesteifigkeit des Zylinders senkrecht zu seinem Querschnitt deutlich geringer als jene des Abstreifers (6) ist, wenn er nicht unter Druck gesetzt ist, und dass die Biegesteifigkeit des Zylinders senkrecht zu seinem Querschnitt deutlich größer als jene des Abstreifers (6) ist, wenn der Zylinder unter Druck gesetzt ist.

6. Scheibenwischerblatt nach Anspruch 5, **dadurch gekennzeichnet, dass** die Mittel zur zeitlichen Variation der Biegesteifigkeit des Längsstücks (7) Mittel zur Unterdrucksetzung des Zylinders sind.

7. Scheibenwischerblatt nach einem der Ansprüche 5 und 6, **dadurch gekennzeichnet, dass** der Zylinder und der Abstreifer (6) aus einem Stück hergestellt sind.

8. Scheibenwischerblatt nach einem der vorhergehenden Ansprüche, **dadurch gekennzeichnet, dass** es einen Pantographen (8) umfasst, der mit dem Längsstück (7) an mehreren Punkten (10) verbunden ist.

9. Scheibenwischer (4), umfassend einen Antriebs- und Aufhängungsarm (9), **dadurch gekennzeichnet, dass** er ein Scheibenwischerblatt (5) nach einem der vorhergehenden Ansprüche umfasst, das mit einem Ende des Aufhängungsarms (9) verbunden ist.

10. Scheibenwischer (4), umfassend einen Antriebs- und Aufhängungsarm (9), **dadurch gekennzeichnet, dass** er ein Scheibenwischerblatt (5) nach einem der Ansprüche 3 bis 8 umfasst, das mit einem Ende des Aufhängungsarms (9) verbunden ist, und dass er eine Steuerelektronik für die Steuermittel (10) der Biegesteifigkeit des Längsstücks (7) in der Vertikalebene XZ besitzt, umfassend einen Prozessor und einen Speicher, in dem eine Steuerlogik gespeichert ist, wobei diese Elektronik auch einen Antriebsmotor des Scheibenwischers steuert.

11. Verfahren zur Steuerung eines Scheibenwischers (4) nach einem der Ansprüche 9 bis 10, **dadurch gekennzeichnet, dass**:
in einer Wischphase das Längsstück (7) derart gesteuert wird, dass seine Biegesteifigkeit in der Vertikalebene XZ gering ist,
in einer Übergangsphase das Längsstück (7) derart gesteuert wird, dass seine Biegesteifigkeit in der Vertikalebene XZ stark ist, dann der Aufhängungs- und Antriebsarm (9) über die Speicherposition (15) verschoben wird.

12. Computerprogrammprodukt, umfassend eine Reihe von Befehlen, das dazu geeignet ist, ein Verfahren nach Anspruch 11 einzusetzen, wenn die Reihe von Befehlen auf einem Computer ausgeführt wird.

## Claims

1. Wiper blade (5) for a surface (1) of the type with double curvature, said wiper blade comprising a flexible longitudinal scraper (6), and a means (8) of exerting a bearing force at at least one point of said scraper (6) in a direction Z mainly normal to the surface (1), and
also a longitudinal part (7), securely attached to the scraper (6) at several points (10), **characterized in that** it comprises
means for varying, in time and in at least one segment of the longitudinal part (7), the flexing rigidity of this longitudinal part (7) in a plane XZ normal to the surface (1), between previously selected values.

2. Wiper blade according to Claim 1, **characterized in that** the longitudinal part (7) has at least two very different flexing rigidity values along axes at right angles to its longitudinal axis X.

3. Wiper blade according to Claim 2, **characterized in that** the longitudinal part (7) is a blade of rectangular section, the thickness of which is such that the flexing rigidity of the blade at right angles to this thickness is significantly less than that of the scraper (6), and the width of which is such that the flexing rigidity of the blade at right angles to this width is significantly greater than that of the scraper (6).

4. Wiper blade according to Claim 3, **characterized in that** the means for varying the flexing rigidity of the longitudinal part (7) in time are means for pivoting the blade between a position for which its main plane is parallel to the horizontal plane XY, and a position for which its main plane is at right angles to the horizontal plane XY.

5. Wiper blade according to Claim 2, **characterized in that** the longitudinal part (7) is a long cylinder of small section, hollow, suitable for being pressurized, and such that the flexing rigidity of the cylinder at right angles to its section is significantly less than that of the scraper (6) when it is not pressurized, and that the flexing rigidity of the cylinder at right angles to its section is significantly greater than that of the scraper (6) when the cylinder is pressurized.

6. Wiper blade according to Claim 5, **characterized in that** the means for varying the flexing rigidity of the longitudinal part (7) in time are means for pressurizing the cylinder.

7. Wiper blade according to either one of Claims 5 or 6, **characterized in that** the cylinder and the scraper (6) are made of a single piece.

8. Wiper blade according to any one of the preceding claims, **characterized in that** it comprises a pantograph (8) securely attached to the longitudinal part (7) at several points (10).

9. Windscreen wiper (4) comprising a driving and suspension arm (9), **characterized in that** it comprises a wiper blade (5) according to any one of the preceding claims, securely attached to an end of said suspension arm (9).

10. Windscreen wiper (4) comprising a driving and suspension arm (9), **characterized in that** it comprises a wiper blade (5) according to any one of Claims 3 to 8, securely attached to an end of said suspension arm (9) and **in that** it comprises electronics circuitry for controlling means (10) for controlling the flexing rigidity of the longitudinal part (7) in the vertical plane XZ, comprising a processor and a memory in which control software is stored, this electronic circuitry also controlling a motor driving the windscreen wiper.

11. Method for controlling a windscreen wiper (4) according to either one Claims 9 or 10, **characterized in that**:
in a wiping phase, the longitudinal part (7) is controlled in such a way that its flexing rigidity in the vertical plane XZ is low,
in a transition phase, the longitudinal part (7) is controlled in such a way that its flexing rigidity in the vertical plane XZ is high, then the suspension and
driving arm (9) is displaced over the storage position (15).

12. Computer programme product comprising a series of instructions suitable for implementing a method according to Claim 11 when said series of instructions is executed on a computer.
